# EUROPEAN PATENT APPLICATION

(11) **EP 3 213 902 A1**
(43) Date of publication of application: **06.09.2017**
(21) Application number: 15854229.0
(22) Date of filing: 17.09.2015
(51) Int. Cl.: B29C 49/46, B29C 49/06

(54) **PREFORM FOR LIQUID BLOW MOULDING**

(30) Priority: 30.10.2014 JP 2014221473; 31.08.2015 JP 2015170945
(71) Applicant: Discma AG, 6331 Hünenberg (CH)
(72) Inventor: TANAKA, Toshimasa, Tokyo 136-8531 (JP); OKUYAMA, Yuichi, Isehara-shi Kanagawa 259-1103 (JP); TABATA, Shinichi, Isehara-shi Kanagawa 259-1103 (JP)
(74) Representative: Lavoix
(86) International application number: PCT/JP2015/004770
(87) International publication number: WO 2016/067511

(57) **Abstract**

Provided is a preform made of PET from which a container of a desired shape can be accurately molded by liquid blow molding. A configuration is adopted where a preform (1) for liquid blow molding formed of polyethylene terephthalate into a bottomed cylinder provided with a mouth portion (2) and a body portion (3) is molded by liquid blow molding into a container by the body portion (3) being stretched in an axial direction at a stretch ratio of 1.50 or more and 3.10 or less and a radial direction at a stretch ratio of 2.26 or more and 3.70 or less.

## Description

### Field

The present invention relates to a preform for liquid blow molding that is formed of polyethylene terephthalate into a bottomed cylinder provided with a mouth portion and a body portion and molded by liquid blow molding into a container.

### Background

Containers made of polyethylene terephthalate ("PET" hereinbelow) as represented by so-called PET bottles are used in various uses, such as for beverages, for foods, and for cosmetics.

Such containers are generally molded into a predetermined shape by heating a preform made of PET formed by injection molding, compression molding, or the like into a bottomed cylinder integrally provided with a cylindrical mouth portion and a test-tube-shaped body portion until a stretch effect is expressed and, in this state, supplying pressurized air into the preform while using a stretch rod to stretch the preform in an axial direction and a radial direction (for example, see patent literature 1). Moreover, by filling the molded container with a liquid such as a beverage in a subsequent process, a product is provided.

### Citation List

### Patent Literature

Patent Literature 1: JP 2014-88004A

### Summary

### Technical Problem

However, with a conventional preform made of PET, there is a problem where, in a situation where attempted is molding by air blow molding into a container of a shape where a stretch ratio in a radial direction is low, a traceability to a mold shape becomes low and, in conjunction with contraction of the container arising after molding, a container of a desired capacity and height cannot be obtained.

In contrast, known is liquid blow molding where, by supplying a pressurized liquid instead of pressurized air to a preform made of PET, this preform is molded into a container of a predetermined shape; however, not known is at what stretch ratio the preform should be stretched in this situation of molding by liquid blow molding the preform made of PET into the container to obtain a favorable container.

The present invention is made in view of such problems and has as an object to provide a preform made of PET from which a container of a desired shape can be accurately molded by liquid blow molding.

### Solution to Problem

A preform for liquid blow molding of the present invention is a preform for liquid blow molding formed of polyethylene terephthalate into a bottomed cylinder provided with a mouth portion and a body portion, wherein by liquid blow molding, the body portion is molded into a container by being stretched in an axial direction at a stretch ratio of 1.50 or more and 3.10 or less and being stretched in a radial direction at a stretch ratio of 2.26 or more and 3.70 or less.

With the preform for liquid blow molding of the present invention, in the above configuration, preferably, the stretch ratio in the radial direction of the body portion by liquid blow molding is 2.26 or more and less than 2.88.

With the preform for liquid blow molding of the present invention, in the above configuration, preferably, the stretch ratio in the axial direction of the body portion by liquid blow molding is 1.50 or more and less than 3.00 and the stretch ratio in the radial direction of the body portion by liquid blow molding is 2.26 or more and 3.10 or less.

### Advantageous Effects of Invention

According to the present invention, a preform made of PET from which a container of a desired shape can be accurately molded by liquid blow molding can be provided.

### Brief Description of Drawings

[FIG. 1] A partial cross-sectional view viewing a preform that is one embodiment of the present invention from the side.
[FIG. 2] A plot diagram illustrating test results where preforms made of PET in table 1 are molded into containers by liquid blow molding.
[FIG. 3] A plot diagram illustrating test results where the preforms made of PET in table 1 are molded into containers by air blow molding.
[FIG. 4] A plot diagram illustrating the test results in table 2.

### Description of Embodiments

The present invention is illustrated and described more specifically below with reference to the drawings.

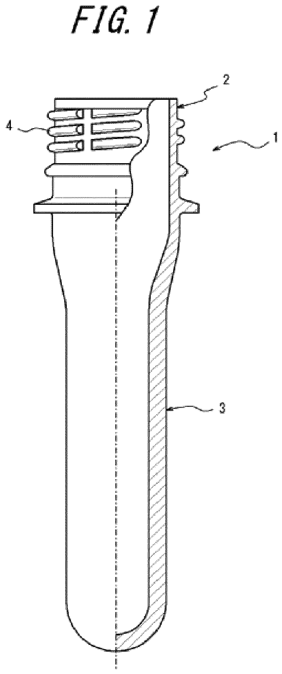

A preform 1 that is one embodiment of the present invention illustrated in FIG. 1 is made of PET (polyethylene terephthalate) molded by injection molding and is formed into a bottomed cylinder provided with a mouth portion 2 and a body portion 3. This preform 1 is not limited to being formed by injection-molding PET and can also be formed by, for example, molding PET into a predetermined shape by compression molding or extrusion blow molding. The mouth portion 2 of the preform 1 is formed into a cylinder, and a male thread portion 4 is integrally provided on an outer peripheral surface thereof. The body portion 3 is formed into a test-tube shape of a circular cross section extending along an axial direction and is provided below the mouth portion 2 coaxially and integrally with this mouth portion 2.

This preform 1 is used in liquid blow molding; by a pressurized liquid being supplied to the body portion 3 through the mouth portion 2 during this liquid blow molding, the body portion 3 is stretched in the axial direction and a radial direction thereof to be molded into a container of a predetermined shape. That is, the preform 1 is molded into a container of a predetermined shape conforming to an inner surface of a cavity of a mold by this body portion 3 being mounted in a cavity of a mold for blow molding that is not illustrated and the body portion 3 being stretched in the axial and radial directions thereof by the pressurized liquid supplied through the mouth portion 2.

Note that as the liquid supplied to the preform 1 during liquid blow molding, it is preferable to use a liquid to be ultimately filled in the container as a product, such as a beverage, a cosmetic, a drug, a detergent, or a body soap. By doing so, a filling process of the liquid into the molded container can be omitted, increasing productivity.

When liquid blow molding as above, it is preferable to heat the body portion 3 of the preform 1 in advance by a heater or the like to a temperature where a stretch effect is expressed. Moreover, when liquid blow molding, a configuration can be adopted where a stretch rod is inserted inside the body portion 3 through the mouth portion 2 and stretching in the axial direction of the body portion 3 is assisted by this stretch rod. Note that when heating the preform 1, in consideration of productivity, a molding process according to a so-called hot preform method where, for example, residual heat at the time of preform molding is used can also be adopted.

The preform 1 of the present invention is molded by liquid blow molding into the container of the predetermined shape by the body portion 3 being stretched in the axial direction thereof at a stretch ratio of 1.50 or more and 3.10 or less and in the radial direction at a stretch ratio of 2.26 or more and 3.70 or less. A more preferable range of the stretch ratio in the radial direction of the body portion 3 of the preform 1 of the present invention in liquid blow molding is 2.26 or more and less than 2.88.

The stretch ratios in the axial direction and the radial direction of the preform 1 during liquid blow molding can be set to the above ranges by making various modifications to an axial-direction dimension and a radial-direction dimension (inner-diameter dimension) of the cavity of the mold for blow molding relative to an axial-direction dimension and a radial-direction dimension (outer-diameter dimension) of the body portion 3 of the preform 1 or making various modifications to the axial-direction dimension and the radial-direction dimension (outer-diameter dimension) of the body portion 3 of the preform 1 relative to the axial-direction dimension and the radial-direction dimension (inner-diameter dimension) of the cavity of the mold for blow molding.

By the body portion 3 being stretched by liquid blow molding in the axial direction and the radial direction thereof at the stretch ratios of the above ranges, the preform 1 of the present invention sufficiently traces the inner surface of the cavity of the mold and is accurately molded into a container of a desired shape having a desired capacity, height, and the like without giving rise to inordinate contraction of the molded container and without rupturing the container during molding.

Furthermore, with the preform 1 of the present invention, the stretch ratio in the axial direction of the body portion 3 by liquid blow molding is preferably 1.50 or more and less than 3.00 and the stretch ratio in the radial direction of a body portion 4 by liquid blow molding is preferably 2.26 or more and 3.10 or less. By stretching the body portion 3 in the axial direction and the radial direction thereof at stretch ratios of such ranges, the container can be accurately molded into the desired shape having the desired capacity, height, and the like and voids (minute cavities included in an object: pores) arising in the molded container and reducing a transparency thereof can be prevented, thereby enabling molding of a container with high transparency and a favorable appearance.

To verify appropriate stretch ratios in the axial direction and the radial direction of the body portion of the preform at which this preform formed of PET can be accurately molded by liquid blow molding into the container of the desired shape, a test is performed of examining an influence of the stretch ratios in the axial direction and the radial direction on a molding favorability of the container obtained by liquid blow molding the preform using three types of preforms made of PET (Nos. 1 to 3) where shapes of the body portions differ from each other and seven types of molds for blow molding where the axial-direction dimensions and the radial-direction dimensions of the cavities differ from each other and liquid blow molding while making various modifications to the stretch ratio in the axial direction (ASR) and the stretch ratio in the radial direction (HSR). Test results thereof are indicated in table 1. Note that for comparison, table 1 also indicates determinations of molding favorabilities of these containers in a situation where the preforms are molded into containers by air blow molding under similar conditions.

**[Table 1]**

| No | Stretch ratio | | | PET | |
|---|---|---|---|---|---|
| | ASR | HSR | PSR | Liquid blowing | Air blowing |
| 1 | 1.50 | 3.50 | 5.25 | ○ | ○ |
| | 2.00 | 2.75 | 5.50 | ○ | × |
| | 2.00 | 4.50 | 9.00 | × | ○ |
| | 2.75 | 3.50 | 9.63 | ○ | ○ |
| | 2.50 | 4.00 | 10.00 | × | ○ |
| | 3.00 | 5.00 | 15.00 | × | ○ |
| | 3.50 | 4.50 | 15.75 | × | × |
| 2 | 2.37 | 2.48 | 5.86 | ○ | ○ |
| | 3.16 | 1.95 | 6.14 | ○ | × |
| | 316 | 3.19 | 10.05 | × | × |
| | 4.34 | 2.48 | 10.75 | × | × |
| | 3.94 | 2.83 | 11.17 | × | × |
| | 4.73 | 3.54 | 16.76 | × | × |
| | 5.52 | 3.19 | 17.59 | × | × |
| 3 | 1.69 | 2.88 | 4.87 | ○ | ○ |
| | 2.25 | 2.26 | 5.10 | ○ | × |
| | 2.25 | 3.70 | 8.34 | ○ | ○ |
| | 3.10 | 2.88 | 8.92 | ○ | ○ |
| | 2.82 | 3.29 | 9.27 | ○ | ○ |
| | 3.38 | 4.11 | 13.90 | × | ○ |
| | 3.94 | 3.70 | 14.60 | × | × |

In this test, the molding favorability of the blow-molded container is determined based on a reduction ratio of an internal capacity of the molded container (contraction ratio of the molded container) and a reduction ratio of the height of the container after 1 day from the molding thereof (change over time). Note that in table 1, ○ indicates that the moldability is favorable (the reduction rate relative to an initial internal capacity is 5% or less and a reduction rate relative to an initial container height is 1% or less) and × indicates that the moldability is unfavorable. Moreover, in a situation where the preform ruptures during blow molding and no container is formed, the molding favorability is determined to be ×. Table 1 lists for reference stretch ratios of a surface area of the body portion (PSR) of the preforms in addition to the stretch ratios in the axial direction (ASR) and the stretch ratios in the radial direction (HSR) of the preforms.

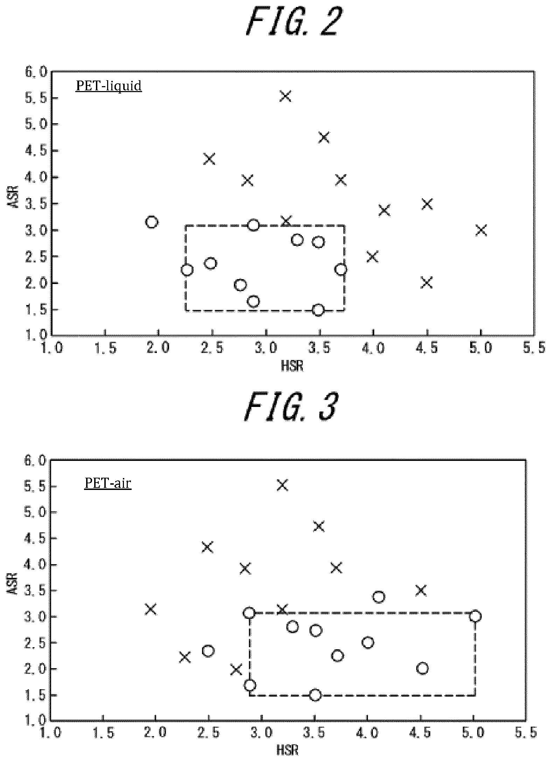

FIG. 2 is a plot diagram illustrating test results where the preforms made of PET in table 1 are molded into containers by liquid blow molding, and FIG. 3 is a plot diagram illustrating test results where the preforms made of PET in table 1 are molded into containers by air blow molding.

From the test results illustrated in table 1 and FIG. 2, it is understood that in the situation of molding the preform made of PET into the container of the predetermined shape by liquid blow molding, setting the stretch ratios in the axial direction and the radial direction so the stretch ratio in the axial direction of the body portion is 1.50 or more and 3.10 or less and the stretch ratio in the radial direction of the body portion is 2.26 or more and 3.70 or less enables the preform to be molded into the container with favorable moldability by liquid blow molding.

In contrast, from the test results illustrated in table 1 and FIG. 3, it is understood that in the situation of molding the preform made of PET into the container of the predetermined shape by air blow molding, a moldability of the container can be ensured even in a range where the stretch ratio in the radial direction is higher than is the case in liquid blow molding; however, it is also understood that, in contrast, the moldability of the container decreases in a range where the stretch ratio in the radial direction is lower, at less than 2.88, than is the case in liquid blow molding. That is, it is understood that in the situation of molding the preform made of PET into the container of the predetermined shape by liquid blow molding, setting the stretch ratios in the axial direction and the radial direction so the stretch ratio in the axial direction of the body portion is 1.50 or more and 3.10 or less and the stretch ratio in the radial direction is 2.26 or more and less than 2.88 enables molding with favorable moldability even for a container of a shape where the stretch ratio in the radial direction is low such that it cannot be molded by air blow molding.

Furthermore, from table 1, it is understood that in the situation of molding the preform made of PET into the container of the predetermined shape by air blow molding, the preform may not be able to be molded even if the stretch ratio of the surface area thereof (PSR) is small; however, it is also understood that in the situation of molding the preform made of PET into the container of the predetermined shape by liquid blow molding, setting the stretch ratios in the axial direction and the radial direction of the preform so the stretch ratio of the surface area thereof (PSR) is 8.92 or more enables the preform to be molded into the container with reliability and favorable moldability.

Next, a test is performed for the preforms made of PET of examining, similarly to the test illustrated by table 1, the influence of the stretch ratios in the axial direction and the radial direction on the molding favorability of the container obtained by liquid blow molding the preform using two types of molds (Nos. 1 and 2) where the axial-direction dimensions and the radial-direction dimensions of the cavities differ from each other and seventeen types of preforms and liquid blow molding while making various modifications to the stretch ratio in the axial direction (ASR) and the stretch ratio in the radial direction (HSR) so these differ from those indicated in table 1 and of evaluating a presence or absence of reduction in transparency due to voids for containers deemed to have favorable moldability. Test results thereof are indicated in table 2. Note that table 2 lists for reference a weight of the body portion (body-portion weight) of each preform and lists for reference stretch ratios of the surface area of the body portion (PSR) of the preforms in addition to the stretch ratios in the axial direction (ASR) and the stretch ratios in the radial direction (HSR) of the preforms.

**[Table 2]**

| No | Body-portion wt. (g) | Stretch ratio | | | PET | | |
|---|---|---|---|---|---|---|---|
| | | ASR | HSR | PSR | Moldability | Voids | Comp. eval. |
| | 16.0 | 2.39 | 3.85 | 9.20 | × | - | × |
| | 18.0 | 2.23 | 4.08 | 9.10 | × | - | × |
| | 12.0 | 3.27 | 3.75 | 12.26 | × | - | × |
| | 20.0 | 2.29 | 3.68 | 8.43 | ○ | × | Δ |
| | 18.1 | 2.55 | 3.58 | 9.13 | ○ | × | Δ |
| 1 | 26.2 | 1.86 | 3.07 | 6.71 | ○ | ○ | ○ |
| | 16.5 | 3.58 | 3.05 | 10.92 | × | - | × |
| | 18.1 | 2.55 | 3.10 | 7.89 | ○ | ○ | ○ |
| | 18.1 | 2.55 | 2.87 | 7.30 | ○ | ○ | ○ |
| | 18.1 | 2.20 | 3.10 | 6.82 | ○ | ○ | ○ |
| | 18.1 | 3.00 | 3.09 | 9.26 | ○ | × | Δ |
| | 18.1 | 2.84 | 2.83 | 8.03 | ○ | ○ | ○ |
| 2 | 15.0 | 2.68 | 3.22 | 8.62 | ○ | × | Δ |
| | 15.0 | 2.49 | 2.87 | 7.14 | ○ | ○ | ○ |
| | 15.0 | 2.16 | 3.05 | 6.57 | ○ | ○ | ○ |
| | 14.0 | 2.55 | 3.48 | 8.85 | ○ | × | Δ |
| | 11.0 | 3.12 | 3.26 | 10.12 | × | - | × |

In this test, similarly to the test of table 1, the molding favorability of the blow-molded container is determined based on a reduction ratio of the internal capacity of the molded container (contraction ratio of the molded container) and the reduction ratio of the height of the container after 1 day from the molding thereof. Note that in table 2, ○ indicates that the moldability is favorable and × indicates that the moldability is unfavorable. Moreover, in a situation where the preform ruptures during blow molding and no container is formed, the molding favorability is determined to be ×.

Meanwhile, the evaluation of whether the transparency of the molded container is reduced due to voids is performed by visual confirmation: a situation where it can be visually determined that there is no reduction in transparency due to voids is determined as ○, and a situation where it can be visually determined that there is reduction in transparency due to voids is determined as ×. Note that this evaluation is not performed in a situation where the moldability is determined to be ×.

Furthermore, a comprehensive evaluation is performed combining the moldability evaluation and the evaluation of transparency reduction due to voids. In the comprehensive evaluation, a situation where both the moldability evaluation and the evaluation of transparency reduction due to voids are ○ is determined as ○ and a situation where the moldability evaluation is ○ but the evaluation of transparency reduction due to voids is × is determined as Δ.

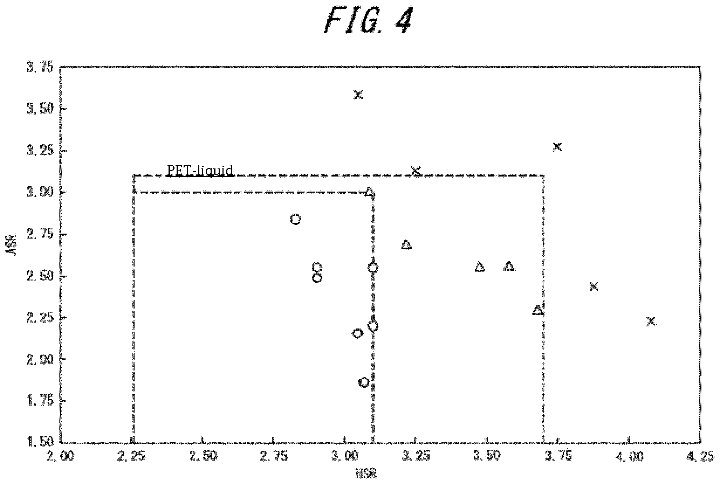

FIG. 4 is a plot diagram illustrating the test results in table 2. Note that in FIG. 4, the comprehensive evaluations in table 2 are plotted as the test results.

From the test results illustrated in table 2 and FIG. 4 as well, similarly to the test results illustrated in table 1 and FIG. 2, it is understood that in the situation of molding the preform made of PET into the container of the predetermined shape by liquid blow molding, setting the stretch ratios in the axial direction and the radial direction in ranges where the comprehensive evaluation in table 2 becomes ○ or Δ-that is, so the stretch ratio in the axial direction of the body portion is 1.50 or more and 3.10 or less and the stretch ratio in the radial direction of the body portion is 2.26 or more and 3.70 or less-enables the preform to be molded into the container with favorable moldability by liquid blow molding.

Meanwhile, it is also understood that while voids may arise in the molded container even in the ranges of the stretch ratios in the axial direction and the radial direction where the preform can be molded into the container with favorable moldability by liquid blow molding (range where Δ is plotted in FIG. 4), no transparency reduction due to voids arises in the molded container in a range where the stretch ratio in the axial direction of the body portion is 1.50 or more and less than 3.00 and the stretch ratio in the radial direction of the body portion is 2.26 or more and 3.10 or less. That is, it is understood that, with the preform made of PET, setting a range for liquid blow molding where the stretch ratio in the axial direction of the body portion is 1.50 or more and less than 3.00 and the stretch ratio in the radial direction of the body portion is 2.26 or more and 3.10 or less prevents transparency reduction due to voids while ensuring container moldability and enables molding into a container with high transparency and a favorable appearance.

It is needless to say that the present invention is not limited to the above embodiment and can be modified in various ways within a range that does not depart from the spirit of the invention.

For example, the preform 1 is not limited to the shape illustrated in FIG. 1 and can adopt various shapes as long as a relationship between the axial-direction dimension and the radial-direction dimension of the cavity of the mold for blow molding is such that the body portion is stretched at a stretch ratio of 1.50 or more and 3.10 or less in the axial direction and at a stretch ratio of 2.26 or more and 3.70 or less in the radial direction-for example, one of a shape relative to the shape illustrated in FIG. 1 where the axial-direction dimension of the body portion 3 is of a smaller ratio compared to the radial-direction dimension. Moreover, a temperature of the liquid after molding the preform 1-that is, a content liquid-is preferably 75° or less.

### Reference Signs List

1 Preform
2 Mouth portion
3 Body portion
4 Male thread portion

## Claims

1. A preform for liquid blow molding formed of polyethylene terephthalate into a bottomed cylinder provided with a mouth portion and a body portion, wherein
by liquid blow molding,
the body portion is molded into a container by being stretched in an axial direction at a stretch ratio of 1.50 or more and 3.10 or less and being stretched in a radial direction at a stretch ratio of 2.26 or more and 3.70 or less.

2. The preform for liquid blow molding according to claim 1, wherein the stretch ratio in the radial direction of the body portion by liquid blow molding is 2.26 or more and less than 2.88.

3. The preform for liquid blow molding according to claim 1, wherein the stretch ratio in the axial direction of the body portion by liquid blow molding is 1.50 or more and less than 3.00 and the stretch ratio in the radial direction of the body portion by liquid blow molding is 2.26 or more and 3.10 or less.
